Europäisches Patentamt

European Patent Office

Office européen des brevets

(19)

(11) Publication number: **0 269 139**
**A1**

# EUROPEAN PATENT APPLICATION

(21) Application number: 87201915.3

(22) Date of filing: 07.10.87

(51) Int. Cl.⁴: **G01N 31/22**

(30) Priority: 27.10.86 NL 8602680

(43) Date of publication of application:
01.06.88 Bulletin 88/22

(84) Designated Contracting States:
AT BE CH DE ES FR GB IT LI LU NL SE

(71) Applicant: **DUPHAR INTERNATIONAL RESEARCH B.V**
**C.J. van Houtenlaan 36**
**NL-1381 CP Weesp(NL)**

(72) Inventor: **Oderkerk, Robby**
**OCTROOIBUREAU ZOAN B.V. P.O. Box 140**
**NL-1380 AC Weesp(NL)**

(74) Representative: **Swaters, Pieter D. et al**
**OCTROOIBUREAU ZOAN B.V. P.O. Box 140**
**NL-1380 AC Weesp(NL)**

(54) Method of preparing a substrate to be used for detection purposes and device for detecting certain air constituents.

(57) The invention relates to a method of preparing a substrate to be used for detection purposes which substrate can undergo a colour reaction by contact with a reagent to be influenced by certain substances to be detected in the environment, by bringing the colour-producing (chromogenic) substance, if desired after admixture with auxiliary substances, in powder form, and then distributing the powder on an adsorbing carrier and exerting a pressure thereon.

The invention further relates to a device for detecting certain undesired air constituents, which device, in addition to the above-mentioned substrate, comprises a reagent provided on a carrier which reagent is influenced by the air constituents to be detected, as well as means for bringing the substrate and the reagent in contact with each other during use of the device and for so producing a colour reaction. Finally the invention relates to such a device which, before use, comprises a moulded member with finger grip between the substrate and the reagent carrier, as well as to the moulded member itself and to a sheet destined for such moulded members and covering a substrate entirely on each side.

## Method of preparing a substrate to be used for detection purposes and device for detecting certain air constituents.

The invention related to a method of preparing a substrate to be used for detection purposes, which substrate can undergo a colour reaction by contact with a reagent to be influenced by certain substances to be detected in the environment.

Such a substrate is known from literature, for example, from United States Patent Specification 3.689.224 and from the Netherlands Patent Applications 7013950 and 8001133 laid open to public inspection. The substrate described in the said Patent Specifications consists of an adsorbing carrier, in particular a filter paper, for example, cellulose paper, on which the colour-producing or chromogenic substance has been provided. As chromogenic substances are mentioned organic esters, for example, indoxyl acetate, 2,6-dichlorobenzenone indophenyl acetate (DIBIA), for a mixture of α-naphthyl acetate and diazonium blue. In the hydrolysis of these substances under the influence of a reagent which comprises the enzyme cholinesterase or a derivative thereof, a deep-blue colour is obtained. The activity of this enzyme is specifically inhibited by the presence of cholinesterase inhibitors, for example, certain organic phosphorous compounds and carbamates which may occur as undesired substances in the environment . Pseudocholinesterase, acetylcholinesterase and butyrylcholinesterase are mentioned as cholinesterase derivates suitable for this purpose. Some pesticides in agriculture and horticulture, as well as chemical battle gases, in particular nerve gases, may comprise cholinesterase-inhibiting compounds, the environmental presence of which is to be detected in a simple manner. For example, cholinesterase-inhibiting substances can easily be determined in waste fluids of pesticide-producing or processing industries and of agricultural industries and market gardens, as well as in the surface water on which these farms drain their waste fluids. In detecting undesired substances in the atmosphere, for example, the above-mentioned military battle gases or poisonous air constituents in e.g. glasshouses or workshops, an air sample is drawn through the reagent as a result of which the activity of the enzyme in the presence of cholinesterase-inhibiting substances in the air is inhibited.

It is known from United States Patent Specification 3.689.224 mentioned hereinbefore to provide the chromogenic substance on the adsorbing carrier by impregnation. In the Netherlands Patent Application 7013950 mentioned hereinbefore the chromogenic substance is also provided by impregnation on the filter paper used as the substratum. This impregnation is carried out by dissolving the chromogenic substance in a suitable solvent, treating the carrier or substratum with the resulting solution, and finally removing the solvent by drying.

It has been found, however, that when a substrate obtained in this manner is used, the color formation upon contact with the reagent, for example, cholinesterase or a derivative thereof, is unsatisfactory. Moreover, the stability of such a substrate is not optimum, which appears from a reduced color formation upon storage. A long storage stability is required certainly if it is destined for military uses, hence for the detection of battle gases.

It has now been found that a substrate having an improved color development and stability can be prepared by bringing the colour-producing (chromogenic) substance, if desired after admixture with auxiliary substances, in powder form, and then distributing the powder on an adsorbing carrier, and exerting a pressure thereon. A mechanical pressure may be exerted on the mixture, for example, by pressing, rolling or rubbing. An extra advantage of the method according to the invention is that the substrate can be prepared more easily and hence cheaper. In fact, the use of a solvent and the consequently necessary drying of the substrate - solvent coming in the environment - are avoided. Moreover, when using an adsorbing carrier for the substrate, the content of chromogenic substance in the substrate is independent of the spreading in thickness of the adsorbing carrier and of the type of carrier material. In addition, any decomposition of chromogenic substances which are unstable in solution is avoided.

Any substance which produces a colour by contact with a certain reagent may be considered as a chromogenic substance suitable for the substrate to be prepared. When cholinesterase or a derivative thereof is used as the reagent, the above-mentioned organic esters may successfully be used as chromogenic substances. Various materials may be used as auxiliary substances provided they are inert with respect to the selected chromogenic substance, for example, salts, e.g. NaCl, carbohydrates, sugars, e.g. mannitol, and natural polymers or derivatives thereof, or mixtures of these or similar substances. Dependent on the use or selected type of substrate or chromogenic substance, stabilisers, antioxidants, desintegrants and lubricants may further optionally be added to the mixture.

Preferably filter paper is used as an adsorbing carrier; the term filter paper should be understood to include not only cellulose paper the like, but also synthetic material sheets or sheets comprising synthetic material, provided said sheets having a sufficient adsorbing capacity.

For practical considerations it is to be preferred to distribute the powder between two filter papers and then to exert pressure of the filter papers and the powder provided therebetween. It is further of advantage to prepare the substrate in the desired dimensions by cutting or punching after the last-mentioned treatment, a part of the surface of the filter papers with the powder provided therebetween, to a given shape and by then pressing the parts of the filter paper together on their outer edges, so that the powder is enclosed within the said parts. By this latter treatment it is avoided that powder could be lost from between the filter papers, in particular at the outer edge of the substrate.

As already mentioned hereinbefore, the substrates prepared according to the invention may be used for detecting certain substances in the environment, for example, in waste fluids or surface water. However, the substrates are meant in particular for detecting certain undesired air constituents in the atmosphere. In that case the reagent which is influenced by the air constituents to be detected, is preferably provided on an air-pervious carrier through which the air to be examined can be drawn. The reagent is exposed to the air. After contact with the substrate prepared according to the invention and wetting, if so desired, a colour reaction can be produced depending on the presence and the nature of the air constituents to be detected. In United States Patent Specification 3.689.224 and Netherlands Patent Applications 7013950 and 8001133 mentioned hereinbefore, the said colour reactions are described in detail, in particular for detecting atmospheric impurities with enzyme-inhibiting activity, for example, certain organic phosphorous compounds and carbamates.

The invention also relates to a device for detecting such undesired air constituents, comprising a substrate which is capable of undergoing a colour reaction by contact with a reagent, a reagent which before use of the device is spatially separated from the substrate and is provided on an air-pervious carrier, which reagent is influenced by the air constituents to be detected, through which carrier the air to be examined can be drawn so as to expose the said reagent to the air, optionally an air-tight and liquid-tight reservoir having an easily rupturable wall, said reservoir being filled with a liquid desired for the colour reaction, and means for bringing the substrate in contact with the reagent during use of the device and, in case a liquid reservoir is present, to rupture the wall of the reservoir so as to wet the substrate and/or the reagent carrier and to produce the colour reaction. Such a device is described in the Netherlands Patent Applications 7013950 and 8001133. Especially the detection device described in the last-mentioned Patent application has proved to be excellently suitable; such a detector is easy the handle, easy to use and is reliable. The wetting liquid required in the colour developing reaction is present in the detector itself, namely in a reservoir having a wall which can be ruptured during operation, as a result of which the user of the detector need not use water for wetting from the environment, which water often is already contaminated. The detector described in the last-mentioned Patent Application is destined in particularly for military uses, i.e. for detecting enemy battle gases in the atmosphere, and hence comprises a mount with which the detector can be provided so as to fit in the air inlet aperture of a gas mask or gas mask filter. In this manner the air to be detected can very simply be drawn through the reagent carrier. The device according to the invention is characterised in that it comprises a substrate obtained by using the method already decsribed hereinbefore, namely by bringing the colour-producing (chromogenic) substance, if desired after admixture with auxiliary substances, in powder form and then distributing the powder on an adsorbing carrier, and exerting a pressure thereon.

It has been found, however, that upon prolonged storage of the detection device described hereinbefore and depending on the chromogenic substance used, some colour development has already occurred before the actual use of the device, as has appeared, by sublimation of the chromogenic substance and deposition thereof on the reagent. This has for its result that at the critical instant the user can no longer establish unambiguously whether the developed colour is the result of the desired reaction, i.e. of the reaction of e.g. the enzyme not influenced by cholinesterase-inhibiting air constituents, so the uninhibited enzyme, with the chromogenic substance, or was already present before the detection. Moreover, as a consequence hereof the content of chromogenic substance in the substrate decreases, resulting in an insufficient availability of said substance for the colour development at the desired instant. In order to prevent such a premature colour development of the substrate and such a undesired decrease of the content of chromogenic substance, the device according to the invention may be constructed in such manner that, before use, the device in addition comprises between the substrate and the reagent carrier a moulded member with a finger grip, which member is sufficiently firm to allow removal by means of the finger grip upon making the device ready for use, which member has such dimensions that before use of the device any interaction between substrate and reagent is effectively prevented, and which member is manufactured or composed of such a material that the side facing the substrate impedes sublimation of the chromogenic substance from the substrate and the side facing the reagent carrier is inert with respect to the reagent. Such a detection device comprising a moulded member preferably is provided with a substrate obtained by using the method mentioned hereinbefore, namely by bringing the colour-producing (chromogenic) substance, if desired after admixture with auxiliary substances, in powder form and then distributing the powder on an adsorbing carrier and exerting a pressure thereon. However, also a substrate prepared in a known manner, namely by impregnating a substratum with the chromogenic substance, may also be used in a detection device comprising a moulded member. In that case, however, the advantages of a substrate obtained according to an improved method of preparing and a moulded member as described hereinbefore, are not used collectively.

The moulded member to be used in the device according to the invention is preferably manufactured from an aluminium sheet on each side laminated with a flexible synthetic material, the synthetic material layer facing the substrate consisting of a polyester which impedes sublimation of the chromogenic substance from the substrate. When the substrate comprises an organic ester as a chromogenic substance, in particular 2,6-dichlorobenzenone indophenyl acetate (DIBIA), it has proved to be of advantage that the synthetic material layer of the moulded member facing the substrate consists of a polyethylene terephthalate. In fact, such a polyethylene terephthalate layer has proved to be excellently suitable to be in prolonged contact with the substrate without any interaction occuring and by effectively impeding sublimation of the chromogenic substance from the substrate.

In a likewise favourable embodiment the moulded member to be used in the device according to the invention has such dimensions that it covers the substrate entirely on each side. Instead of using both a substrate and a moulded member in the device, a single component, namely a substrate "packaged" by the moulded member, will thus suffice. The invention also relates to such a substrate "packaged" by the moulded member and to be used in the detection device, i.e. to a moulded member which covers a substrate on each side entirely and is intended to effectively prevent, before use of the device, any interaction between the said substrate and a reagent which is provided on a carrier and can produce a colour reaction by contact with the substrate, which moulded member is manufactured or composed of such a material that the side facing the substrate impedes sublimation of the chromogenic substance from the substrate and the side remote from the substrate is inert with respect to the reagent. Finally the invention relates to a substrate packaged in sheet and suitable to produce from it and said moulded members with substrate, for example, by cutting or punching. Such a sheet which covers a substrate entirely on each side is manufactured from such a material that the side facing the substrate impedes sublimation of the chromogenic substance from the substrate and the side remote from the substrate is inert with respect to the reagent which can produce a colour reaction by contact with the substrate. The said sheet is preferably manufactured from an aluminium sheet on each side laminated with a flexible synthetic material, the synthetic material layer facing the substrate consisting of a polyster which impedes sublimation of a chromogenic substance incorporated in the substrate, said substance being capable of undergoing a colour reaction by contact with a reagent.

The invention will now be described in greater detail with reference to the ensuing specific examples.

## EXAMPLE I

2,6-Dichlorobenzenone indophenyl acetate (DIBIA) in a quantity of 15 parts by weight is mixed with 800 parts by weight of NaCl and 200 parts by weight of mannitol until a homogeneous powder is obtained. This powder is rolled by means of a socalled ointment mill into fibre paper (Ederol ® 261). A second layer of fibre paper is rolled over the said layer. Out of the fibre papers with the chromogenic substance therebetween, a portion can be punched in the desired form and be used as a substrate, for example, in the device described in Example II.

## EXAMPLE II

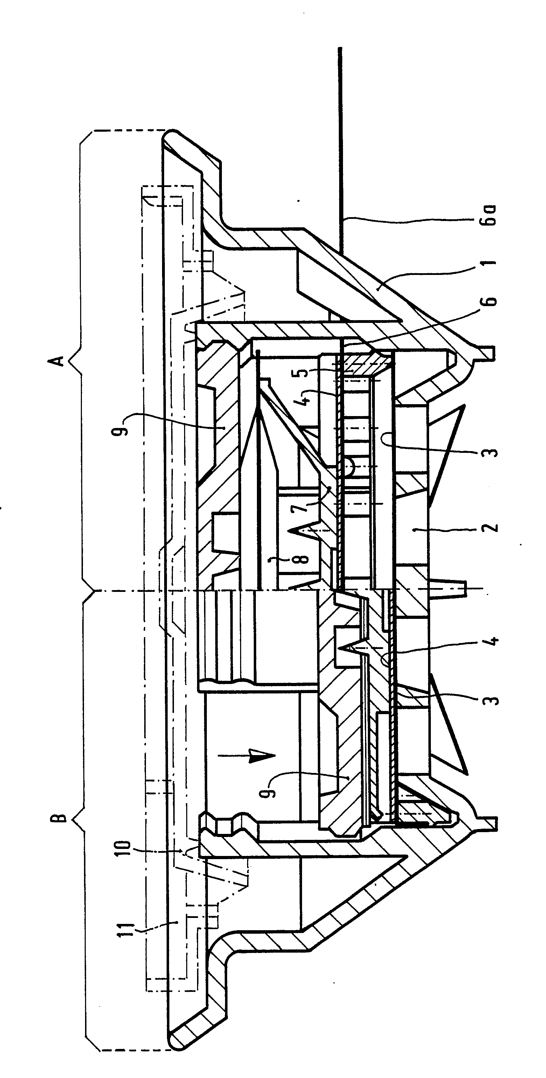

The accompanying Figure is a cross-sectional view of a device according to the invention in a suitable embodiment. In outline this device is similar to that described and shown in Netherlands Patent Application 8001133 mentioned hereinbefore. The portion indicated by A refers to the device prior to use, the portion indicated by B refers to the device during use as described in Netherlands Patent Application 8001133. The device or detector shown comprises a detector housing 1 having a bottom provided with air-passage apertures 2. An enzyme paper 3, i.e. a fibre paper with a cholinesterase derivative as the reagent, bears on the bottom and is separated from the substrate 4 i.e. filter paper comprising DIBIA, by means of a spacing ring 5. A moulded member 6 having a finger grip 6a, manufactured from aluminium sheet, comprising a polyethylene layer on its lower side, i.e. the side facing the enzyme paper, and comprising a polyethylene terephthalate layer on its top side, i.e. the side adjoining the substrate, is provided between the spacing ring and the substrate. A perforating disk 7 with piercing pins bears on the substrate, while a liquid reservoir 8 is provided on the perforating disk and is covered on tis top side by means of pressure disk 9. In order to prevent inadvertant actuation of the detector, the detector before use comprises a protective cover 10, while the device is completed by a cardboard 11 having a siccative and a enveloping blister package (not shown). When the detector is used, first - of course after having removed the package, siccative cardboard and cover - the moulded member is drawn out of the detector by means of the finger grip after which, as described in Netherlands Patent Application 8001133 mentioned hereinbefore, air to be examined is drawn through the detector and the pressure disk is then pushed downwards. The situation as shown in part B of the figure is then obtained. The piercing pins having pierced the liquid reservoir so that liquid from said reservoir has wetted the parts, i.e. enzyme paper 3 and substrate 4 which parts meanwhile have contacted each other. A colour reaction, if occured, can be evaluated through the apertures 2 in the bottom of the detector housing.

After storage of the detector for a few years, upon use a change in colour was observed which was considerably more prenounced than without use of the moulded member. Further, after storage, the colour development was better when a substrate was used prepared as described in Example I than when a known substrate was used which had been obtained by impregnation of filter paper with a DIBIA solution.

**Claims**

1. A method of preparing a substrate to be used for detection purposes, which substrate can undergo a colour reaction by contact with a reagent to be influenced by certain substances to be detected in the environment, characterised in that the substrate is prepared by bringing the colour-producing (chromogenic) substance, if desired after admixture with auxiliary substances, in powder form, and then distributing the powder on an adsorbing carrier and exerting a pressure thereon.

2. A method as claimed in Claim 1, characterised in that the substrate is prepared by distributing the powder between two filter papers and then exerting a pressure on the filter papers and the powder provided therebetween.

3. A method as claimed in Claim 2, characterised in that the substrate is prepared by cutting or punching, after exerting pressure, a part of the surface of the filter papers with the powder provided therebetween to a given shape and by then pressing the filter paper parts on each other on the outer edge of the substrate thus formed so that the powder is enclosed within the said parts.

4. A method as claimed in any of the preceding Claims of preparing a substrate to be used for detecting certain undesired air constituents which substrate is capable of undergoing a colour reaction by contact with a reagent which is influenced by the air constituents to be detected and which is preferably provided on an air-pervious carrier, through which carrier the air to be examined can be drawn so as to expose the said reagent to the air, characterised in that the substrate is prepared by bringing the colour-producing (chromogenic) substance, if desired after admixture with auxiliary substances, in powder form, and then distributing the powder on an adsorbing carrier and exerting a pressure thereon.

5. A device for detecting certain undersired air constituents, comprising a substrate which can undergo a colour reaction by contact with a reagent, a reagent which, before use of the device, is spatially separated from the substrate and is preferably provided on an air-pervious carrier, which reagent is influenced by the air constituents to be detected, although which carrier the air to be examined can be drawn so as to expose the said reagent to the air, optionally an air-tight and liquid-tight reservoir having an easily rupturable wall, the said reservoir being filled with a liquid desired for the colour reaction, and means for bringing the substrate in contact with the reagent during use of the device and, in case a liquid reservoir is present, to rupture the wall of the reservoir so as to wet the substrate and/or the reagent carrier and the produce the colour reaction, characterised in that the device comprises a substrate obtained by using the method as claimed in Claim 4.

6. A device as claimed in Claim 5, characterised in that the device, before use, in addition comprises between the substrate and the reagent carrier a moulded member, which has a finger grip and is sufficiently firm to allow removal by means of the finger grip upon making the device ready for use, which member has such dimensions that before use of the device any interaction between substrate and reagent is effectively prevented, and which member is manufactured or composed of such a material that the side facing the substrate impedes sublimation of the chromogenic substance from the the substrate and the side facing the reagent carrier is inert with respect to the reagent.

7. A device for detecting certain undesired air constituents, comprising a substrate which can undergo a colour reaction by contact with a reagent, a reagent which, before use of the device, is spatially separated from the substrate and is preferably provided on an air-pervious carrier, which reagent is influenced by the air-constituents to be detected, through which carrier the air to be examined can be drawn so as to expose the said reagent to the air, optionallly an air-tight and liquid-tight reservoir having an easily rupturable wall, the said reservoir being filled with a liquid desired for the colour reaction, and means for bringing the substrate in contact with the reagent during use of the device and, in case a liquid reservoir is present, to rupture the wall of the reservoir so as to wet the substrate and/or the reagent carrier and to produce the colour reaction, characterised in that the device, before use, in addition comprises between the substrate and the reagent carrier a moulded member which has a finger grip and is sufficiently firm to allow removal by means of the finger grip upon making the device ready for use, which member has such dimensions that before use of the device any interaction between substrate and reagent is effectively prevented, and which member is manufactured or composed of such a material that the side facing the substrate impedes sublimation of the chromogenic substance from the substrate and the side facing the reagent carrier is inert with respect to the reagent.

8. A devive as claimed in Claim 6 or 7, characterised in that the moulded member is manufactured from an aluminium sheet, on each side laminated with a flexible synthetic material, the synthetic material layer facing the substrate consisting of a polyester which impedes sublimation of the chromogenic substance from the substrate.

9. A device as claimed in Claim 8 in which the substrate comprises as a chromogenic substance an organic ester, in particular 2,6-dichlorobenzenone indophenyl acetate, characterised in that the synthetic material layer facing the substrate consists of a polyethylene terephthalate.

10. A device as claimed in any of the Claims 6-9, characterised in that the moulded member has such dimensions that it covers the substrate entirely on each side, the moulded member being manufactured or composed of such a material that the side facing the substrate impedes sublimation of the chromogenic substance from the substrate and the side facing the reagent carrier is inert with respect to the reagent.

11. A moulded member to be used in the device as claimed in Claim 10 which covers a substrate entirely on each side and is intended to effectively prevent, before use of the device, any interaction between the said substrate and a reagent which is provided on a carrier and which can produce a colour reaction by contact with the substrate, the moulded member being manufactured or composed of such a material that the side facing the substrate impedes sublimation of the chromogenic substance from the substrate and the side remote from the substrate is inert with respect to the reagent.

12. A sheet which covers a substrate entirely on each side and which is intended for manufacturing therefrom moulded members with substrate as claimed in Claim 11, the sheet being manufactured from such a material that the side facing the substrate impedes sublimation of the chromogenic substance from the substrate and the side remote from the substrate is inert with respect to a reagent which can produce a colour reaction by contact with the substrate.

13. A sheet covering a substrate entirely on each side as claimed in Claim 12, which sheet is manufactured from an aluminium sheet, on each side laminated with a flexible synthetic material, and the synthetic material layer facing the substrate consisting of a polyester which impedes sublimation of a chromogenic substance incorporated in the substrate, said substance being capable of undergoing a colour reaction by contact with a reagent.

0 269 139

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 421 860 (AFANASIEW) <br> * Claims 1,6 * <br> --- | 1 | G 01 N 31/22 |
| A | EP-A-0 060 723 (EKIKA CARBON) <br> * Claims 1,8,9 * <br> --- | 1,4,8 | |
| A | US-A-4 094 642 (SUMIMOTO) <br> * Claims 9,12,13; column 3, lines 34-40 * <br> --- | 1,4,8 | |
| A | EP-A-0 069 037 (CHARVIN) <br> * Claims 1-6,8 * <br> --- | 1-9,14 | |
| A | US-A-3 479 877 (HUDSON) <br> * Claims 1,3,4 * <br> --- | 1-9 | |
| A | US-A-3 681 027 (SMITH) <br> ----- | | |

TECHNICAL FIELDS SEARCHED (Int. Cl.4)

G 01 N

The present search report has been drawn up for all claims

| Place of search | Date of completion of the search | Examiner |
|---|---|---|
| THE HAGUE | 11-03-1988 | NICOLAS H.J.F. |